# EUROPEAN PATENT APPLICATION

(11) **EP 4 421 924 A1**
(43) Date of publication of application: **28.08.2024**
(21) Application number: 23157686.9
(22) Date of filing: 21.02.2023
(51) Int. Cl.: H01M 8/04089, H01M 8/04082

(54) **MANIFOLD PLATE FOR A FUEL CELL**

(71) Applicant: Airbus Operations GmbH, 21129 Hamburg (DE)
(72) Inventor: Linde, Peter, 21129 Hamburg (DE); Hegenbart, Matthias, 21129 Hamburg (DE)

(57) **Abstract**

A manifold plate for a fuel cell is suggested comprising a plurality of openings for leading reactants towards and/or away from the fuel cell and at least one magnet providing a magnetic field which is oriented in a direction of the stack of the fuel cell. The manifold plate defines a main direction which may be seen as in a direction of a stack including electrodes forming the fuel cell. The openings of the manifold plate may be arranged along the main direction of the manifold plate and the magnet of the manifold plate may be arranged between two of the openings and may be oriented so that the direction between north pole and south pole of the magnet corresponds to the main direction.

## Description

### FIELD OF THE INVENTION

The present invention relates to a fuel cell and, in particular, to a manifold plate for a fuel cell.

### BACKGROUND OF THE INVENTION

In order to realize emission free aircraft propulsion, fuel cells have emerged as a promising alternative to convert energy stored in liquid hydrogen tanks into electricity to power electrical engines. However, the weight of such an energy system including fuel cells, hydrogen tanks and engines should be as small as possible for an application in an aircraft.

### SUMMARY OF THE INVENTION

There may thus be a need for an improved performance of a fuel cell, thus providing more energy by a fuel cell having a certain weight.

The object of the present invention is solved by the subject-matter of the independent claims; further embodiments are incorporated in the dependent claims. It should be noted that the following described aspects of the invention apply for the manifold plates, the fuel cells with a manifold plate, and for the aircraft in which the fuel cell is utilized.

In general, a manifold plate for a fuel cell comprises a plurality of openings for leading reactants towards and/or away from the fuel cell and at least one magnet providing a magnetic field which is oriented in a direction of the stack of the fuel cell. The manifold plate defines a main direction which may be seen as in a direction of a stack including electrodes forming the fuel cell. The openings of the manifold plate may be arranged along the main direction of the manifold plate. The magnet of the manifold plate may be arranged between two of the openings and may be oriented so that the direction between north pole and south pole of the magnet corresponds to the main direction.

The magnet of the manifold plate may be arranged at the manifold such that the magnetic field extends through a cathode of the fuel cell when the manifold plate is mounted at the stack including the electrodes forming the fuel cell.

The manifold plate may comprise a plurality of magnets, wherein the direction between north pole and south pole of each of the plurality of magnets corresponds to the main direction of the fuel cell stack. Providing a plurality of magnets which may be arranged side by side as an array in the vicinity of the cathode causes a magnetic field which extends homogeneous through the cathode.

The magnet of the manifold may be arranged within the manifold plate. On the one hand, the magnet or the magnets may be arranged close to a cathode, wherein the magnet or the magnets may be arranged on the inside of a manifold plate or at least within a recess formed on the inside of a manifold plate. On the other hand, the magnet or the magnets may be arranged within a manifold plate, e.g., between plies of a manifold, wherein the magnet is arranged in a recess formed in a plie or layer forming the manifold plate. The manifold plate may comprise a plurality of plies, wherein at least one magnet is arranged between two plies which form outer surfaces of the manifold plate.

The magnet of the manifold plate may be a magnet out of the group consisting of a permanent magnet, an electric magnet, and a superconducting magnet. It may be noted that hydrogen is fluent at very deep temperatures so that the fuel cell stack would be cooled at temperatures at which also superconducting magnets work. It may further be noted that the strength and/or the direction of the magnetic field can be controlled when using an electric magnet or a superconducting magnet.

In general, a fuel cell may comprise a stack including electrodes and a manifold plate with aspects described above, and an aircraft may be provided with such a fuel cell.

The fuel cell may comprise a plurality of manifold plates mounted at the stack including the electrodes forming the fuel cell, wherein the magnets of the manifold plates form an array surrounding at least one of the electrodes. A plurality of manifold plate may be arranged so as to enclose the stack including electrodes forming the fuel cell, wherein the opening in the manifold plates allow reactants to be lead through the fuel cell from different directions.

These and other aspects of the present invention will become apparent from and be elucidated with reference to the embodiments described hereinafter.

### BRIEF DESCRIPTION OF THE DRAWINGS

Exemplary embodiments will be described in the following with reference to the following drawings:
Fig. 1 schematically shows an example of a buildup of a proton exchange membrane fuel cell.
Fig. 2 schematically shows electro chemical reactions of a fuel cell.
Fig. 3 schematically shows a magnetic field effect on cathode reaction in a fuel cell.
Fig. 4 schematically shows a cross-section of magnet field through fuel cell cathode.
Fig. 5 schematically shows a magnetic field through fuel cell cathode by a 3D magnet array.
Fig. 6 schematically shows a fuel cell stack with installed manifold plates.
Fig. 7 schematically shows a cross section of a manifold plate with an integrated magnet.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

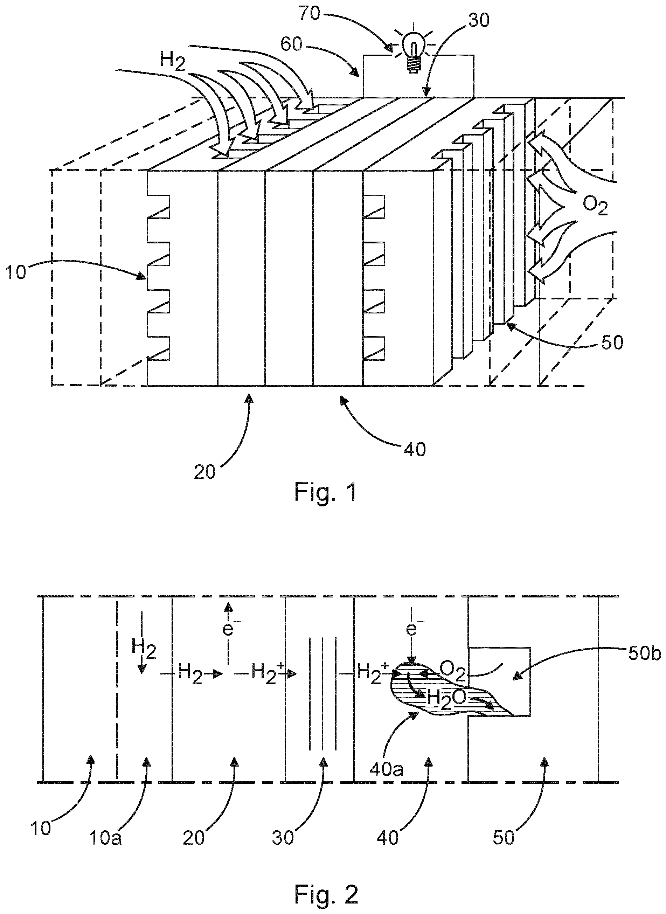

Figure 1 illustrates a section of a stack forming a fuel cell, with a first bipolar plate 10 which may be made of metal and a first electrode 20 which may be made of a Carbon structure, Pt-particles as catalyst, and Nation or Teflon. A membrane 30 which may be made of Nation is arranged between the first electrode 20 and a second electrode 40 which may, again, be made of a Carbon structure, Pt-particles as catalyst, and Nafion or Teflon, followed by a second bipolar plate 50 which may be made of metal. Such a stack is suitable as energy source for an electrical circuit 60 having, e.g., electrical wiring made of copper. The electrical circuit 60 may include an electrical consumer 70.

Thus, figure 1 shows a principal build-up of a Proton Exchange Membrane (PEM) fuel cell. From left to the right the constituents are (i) a bipolar plate, (ii) an electrode, (iii) a membrane, followed by (iv) the second electrode, and (v) the second bipolar plate. Hydrogen Hz may be entered through the gas diffusion channels in the left bipolar plate. Air, or oxygen O₂ may be entered through the gas diffusion channels of the right bipolar plate. An electrochemical process between hydrogen and oxygen results into electron flow in a circuit bridging the two electrodes (or bridging several cells, if stacked), that can operate an electrical consumer. Further results are heat as well as water, that may exit off the right electrode.

Figure 2 illustrates the electro chemical reaction of a fuel cell. Again, the fuel cell is formed by a stack of a first bipolar plate 10 (Metal), a first electrode 20 (Carbon structure, Pt-particles (catalyst), Nafion or Teflon), a membrane 30 (Nation), a second electrode 40 (Carbon structure, Pt-particles (catalyst), Nafion or Teflon), and a second bipolar plate 50 (Metal). As a product of reduction reaction in the cathode, water H₂0 arises which may flow out through the gas diffusion channel 50b for air or oxygen.

To the left, hydrogen gas is entering the anode, via the bipolar plate's gas diffusion channels. Triggered by Pt-particles electrons are split off and wander through an electric circuit towards a consumer, and positive charges hydrogen ions wander through an ion-permeable membrane (which hinders electrons to pass). At the cathode, to the right, oxygen (from air, or pure oxygen) is entering through the neighboring bipolar plate's gas diffusion channels, and is reacting by a reduction reaction with incoming electrons from the electric circuit, originating from the anode, as well as with the positive charged hydrogen ions, coming from the membrane. As a result, water is formed that leaves the cathode via the gas diffusion channels. However, the chemical reaction may be hindered within water volumes so that the water should leave the cathode as fast as possible.

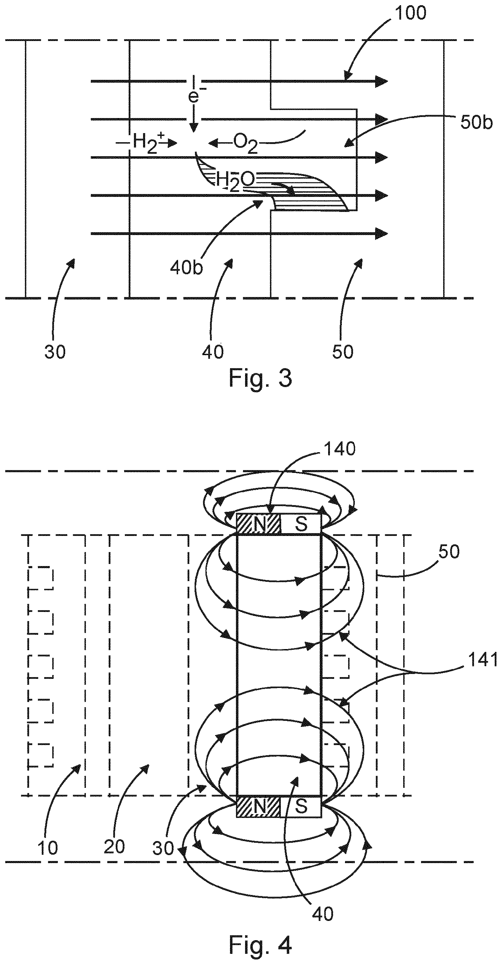

Figure 3 may be seen as a detail view of figure 2, only showing the membrane 30, the second electrode 40 and the second bipolar plate 50. In addition, a magnetic field 100 is illustrated by a plurality of parallel arrows in figure 3. This magnetic field causes a Kelvin effect to which the water 40b is subjected, as the product of the reduction reaction in the cathode, so that the water more effectively flows out through the gas diffusion channel 50b for air or oxygen.

Indeed, it has been shown that a magnetic field passing through a fuel cell, has an effect on the cathode reaction. In Figure 3, a magnetic field extends from the left to the right through the cathode. The field has an enhancing effect on the reduction reaction between oxygen, hydrogen ions and incoming electrons. As has been shown in multiple experiments, a magnetic field improves the chemical reaction in a fuel cell. According to Okada, T., Wakayama, N., Wand, L., Shingu, H., Okano, J., Ozawa, T., "The effect of magnetic field on the oxygen reduction reaction and its application in polymer electrolyte fuel cells", Electrochimica Acta, Vol. 48, 5, pp. 531-539, 2003, an increased current of oxygen reduction take place that can be attributed to magnetic force on 0₂ gas. Further, detailed explanations in Wang, L., Wakayama, N., Okada, T., "Numerical simulation of a new water management for PEM fuel cell using magnet particles deposited in the cathode side catalyst layer", Electrochemistry Communications, Vol. 4, 7, pp. 584-588, 2002, involve water saturation in the cathode, hindering oxygen reduction. Water is a diamagnetic material, and the magnetic field exerts a repulsive Kelvin effect. Thus, the water will be leaving the reaction volume more efficiently, and enable further oxygen reduction, as can be seen in the figure.

Since the reduction reaction can better take place outside the created water, the volume freed from water in the cathode may increase, and an improved reduction reaction can take place, which increases the performance of the fuel cell. That is, more oxygen can react and correspondingly more hydrogen will be entered and react at the anode side. The magnetic field can be established by application of any kind of magnet, like permanent or electromagnetic magnets, or by magnetized particles dispersed in the cathode.

An example of a practical solution for achieving a magnetic field through the cathode is disclosed herein. The performance of a fuel cell is improved by increasing the volume in the cathode available for reduction reaction, by introducing a magnetic field through the cathode. The magnetic field may be generated by locating magnets around the perimeter of the cathode, wherein the magnets may be integrated in manifold plates surrounding the cathode. In the manifold plates, the magnets are covered and, thus, protected by cover plies. Furthermore, the magnets may be located in the center of the cross-section, so that they contribute to the structural behavior of the manifold. Thus, the magnets may be multi-functional, without occupying additional space.

Figure 4 shows a cross-section through a part of a fuel cell, with the cathode in the center. A magnetic field is flowing through the cathode, caused by arrays of magnets that are located just outside the upper and lower perimeter of the cathode. Figure 4 illustrates a first bipolar plate 10, a first electrode 20, a membrane 30, a second electrode 40, and a second bipolar plate 50. Further, an array of magnets 140 as well as a related magnetic field 141 are shown in figure 4. The magnets may be permanent magnets or electric magnets.

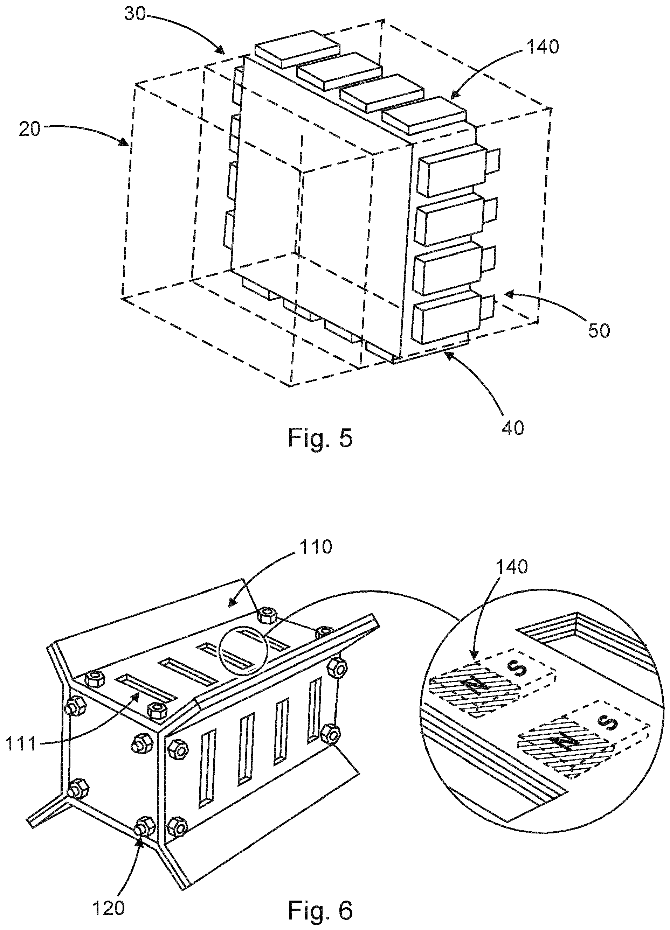

Figure 5 shows the set-up from Figure 4 in an isometric view. It can be seen in figure 5 that arrays of magnets may also be placed along the sides of the cathode. The elements in figure 5 are a first electrode 20 (Carbon structure, Pt-particles (catalyst), Nafion or Teflon), a membrane 30 (Nafion), a second electrode 40 (Carbon structure, Pt-particles (catalyst), Nafion or Teflon), a second bipolar plate 50 (Metal), and an array of magnets 140 (permanent or electro-magnetic).

According to an embodiment, a plurality of fuel cells may be stacked to create a higher voltage, i.e. may be placed in series, using bipolar plates both for oxygen and hydrogen entry.

Figure 6 shows a fuel cell stack installed in manifold plates, wherein the manifold plates can separate entrant hydrogen and oxygen, from exiting hydrogen and oxygen, as well as water. For example, hydrogen may enter the fuel cell through openings on the top, thus exiting the fuel cell at the bottom, whereas oxygen may flow transversely from one side of the fuel cell, through the fuel cell and out of the other side thereof. Flanges at the manifold may help in separating the reactants. Figure 6 shows manifold plates 110 with flanges, openings for reactant entry 111, and bolts with screw nuts 120. For a good functioning of the fuel cell, the stack including electrodes may be compressed by such bolts with screw nuts.

In the detail on the right in figure 6, it is visualized that magnets may be integrated in the manifold plate. These magnets may be part of a magnet array 140 that causes the magnetic field through the cathode. It is noted that the manifold plate may be formed by a plurality of laminated plies.

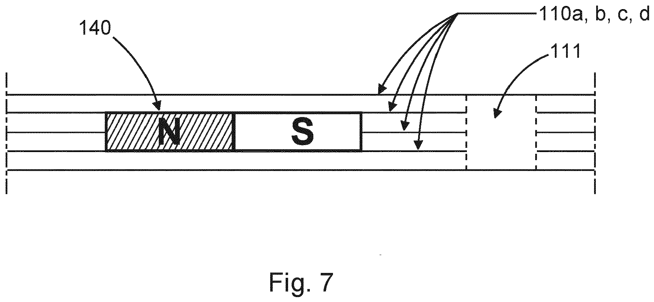

An example of such a manifold plate is illustrated in the cross-sectional view of figure 7, with plies 110a, b, c, d forming the manifold plate. In this example, the plurality of plies comprises two plies forming outer surfaces of the manifold plate and two plies therebetween, wherein the plies between the outer plies have cut-outs which fit to the shape of the magnet so that the magnet can be placed in the cut-out when laminating the plies to form the manifold plate with integrated magnet 140. Another cut-out 111 is formed in all plies to form an opening for reactant flow into or out of the fuel cell.

The size of the magnets can be varied over the perimeter, so as to affect the intensity of the magnetic field distribution. A comparable effect may be achieved by controlling electric magnets or superconducting magnets.

The material of the laminated manifold plate may be chosen as CFRP, but may also be made of metal. It can be seen that the magnets may be integrated in the center and are, thus, covered by the CFRP cover plies. In such a manner, the magnets are protected from chemicals, and the cover layers, by Steiner's rule, have the most influence on the mechanical properties of the laminate. The magnets contribute to the overall strength and stiffness of the laminated manifold plate. They do also not occupy additional space, as they would, if located outside of the manifold plate.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A manifold plate (110) for a fuel cell,
the manifold plate defining a main direction, wherein the main direction of the manifold plate corresponds to a direction of a stack including electrodes (20, 40) forming the fuel cell,
the manifold plate comprising a plurality of openings (111) for leading reactants towards and/or away from the fuel cell, wherein the openings are arranged along the main direction of the manifold plate,
the manifold plate further comprising a magnet (140), wherein the magnet is arranged between two of the plurality of openings (111) and is oriented so that the direction between north pole and south pole of the magnet corresponds to the main direction.

2. The manifold plate (110) of claim 1, wherein the magnet (140) is arranged at the manifold such that the magnetic field (141) extends through a cathode (40) of the fuel cell when the manifold plate is mounted at the stack including the electrodes (20, 40) forming the fuel cell.

3. The manifold plate (110) of any one of claims 1 and 2, wherein the manifold plate comprises a plurality of magnets (140), wherein the direction between north pole and south pole of each of the plurality of magnets corresponds to the main direction.

4. The manifold plate (110) of any one of claims 1 to 3, wherein the magnet (140) is arranged within the manifold plate.

5. The manifold plate (110) of any one of claims 1 to 4, wherein the manifold plate comprises a plurality of plies (1 10a, 110b, 110c, 110d) and wherein the magnet (140) is arranged between two plies which form outer surfaces of the manifold plate.

6. The manifold plate (110) of any one of claims 1 to 5, wherein the magnet (140) is a magnet out of the group consisting of a permanent magnet, an electric magnet, and a superconducting magnet.

7. A fuel cell comprising a stack including electrodes (20, 40) and a manifold plate (110) according to any one of claims 1 to 6.

8. The fuel cell of claim 7, wherein a plurality of manifold plates (110) is mounted at the stack including the electrodes (20, 40) forming the fuel cell, wherein the magnets (140) of the manifold plates form an array surrounding at least one of the electrodes.

9. An aircraft comprising a fuel cell having a stack including electrodes (20, 40) and at least one manifold plate (110) according to any one of claims 1 to 6.

10. The aircraft of claim 9, further comprising an electrical consumer (70) which is connected to and powered by the fuel cell.
